# EUROPÄISCHE PATENTSCHRIFT

(11) **EP 0 649 729 B1**
(45) Veröffentlichungstag und Bekanntmachung des Hinweises auf die Patenterteilung: **12.01.2000**
(21) Anmeldenummer: 94113536.0
(22) Anmeldetag: 30.08.1994
(51) Int. Cl.: B29D 29/06, B65G 15/60, B65G 39/16, B65G 15/02

(54) **Fördervorrichtung mit in einer Bandkurve geführtem Förderband**
Conveyor device with conveyor belt guided along a curve
Dispositif de transport avec bande transporteuse guidée le long d'un tournant

(30) Priorität: 01.09.1993 DE 4329508; 30.10.1993 DE 4337198
(43) Veröffentlichungstag der Anmeldung: 26.04.1995
(73) Patentinhaber: Steiff Fördertechnik GmbH, D-89530 Giengen/Brenz (DE)
(72) Erfinder: Bräuning, Heinz, D-89537 Giengen-Hürben (DE)
(74) Vertreter: Hiebsch, Gerhard F., Dipl.-Ing.

(56) Entgegenhaltungen:
- EP-A- 0 505 679
- DE-A- 4 113 051
- GB-A- 1 279 162
- US-A- 5 038 925

## Beschreibung

Die Erfindung betrifft eine Fördervorrichtung mit einem in einer Bandkurve geführten und über beidends in einem Bandgerüst drehbar gelagerte Umlenkwalzen gelegten endlosen Förderband, dessen -- eine Förderfläche anbietendes -- Obertrum etwa horizontal verläuft und dessen Untertrum zum Obertrum in einem Winkel geneigt ist, wobei sich der Querschnitt der konischen Umlenkwalzen zur Kurvenaußenseite hin erweitert und das Förderband an der Kurvenaußenseite --etwa im Bereich eines Querschnitts gesehen -- eine Rolle mit zum Förderband etwa rechtwinkeliger Umfangsfläche sowie eine der Kurvenaußenseite nahe weitere Rolle mit zum Förderband etwa paralleler Umfangsfläche aufweist und beide Umfangsflächen am Bandgerüst abrollen.

Eine derartige Fördervorrichtung beschreibt die EP-OS 0 505 679; zur Führung des Obertrums des Endlosbandförderers quer zu seiner Bewegungsrichtung sind an einem mit ihm an der Kurvenaußenseite verbundenen Winkelprofil Rollenpaare angebracht, deren Achsen Zueinander im rechten Winkel stehen. Die innere Rolle schlägt horizontal an einem Winkelstück des Bandgerüstes an, die äußere Rolle an der Unterseite eines horizontalen Schenkels eines äußeren Winkelstücks; auf diesem Schenkel liegt das freie Ende des Bandquerschnittes auf, und beide Winkelstücke sind durch Querelemente fest verbunden.

In der Praxis hat sich gezeigt, daß eine solche Rollenführung in einer Bandkurve den störungsfreien Bandlauf nicht gewährleisten kann, da sich im äußeren Kurvenbereich Aufwölbungen od.dgl. Deformationen des Förderbandes ergeben.

In Kenntnis dieses Standes der Technik hat sich der Erfinder das Ziel gesetzt, bei einer Fördervorrichtung der eingangs erwähnten Art eine störungsfreie Kurvenführung anzubieten.

Zur Lösung dieser Aufgabe führt die Lehre nach dem unabhängigen Patentanspruch; die Unteransprüche geben vorteilhafte Weiterbildungen an.

Erfindungsgemäß ist der Rolle mit zum Obertrum des Förderbandes etwa paralleler Umfangsfläche eine Rolle mit gleichgerichteter Umfangsfläche zugeordnet, wobei diese beiden Umfangsflächen an höhenversetzt zueinander weisenden Gegenflächen des Bandgerüstes so anschlagen, daß letztere mit den Umfangsflächen -- bezogen auf die Rollenachse/n -- in Abstand zu dieser/diesen jeweils entgegengesetzt liegende Berührungslinien bilden. Es wird deutlich, daß diese Paarung ein Abheben des Obertrums von den Umlenkwalzen ausgleichend hintanhält.

Nach einem weiteren Merkmal der Erfindung weisen die innere und die äußere Rolle eine gemeinsame Rollenachse auf, und jene Gegenflächen für die Umfangsflächen sind zueinander um das Maß des Rollendurchmessers höhenversetzt. Dabei sollen -- die Gegenflächen aufweisende -- Anschlagteile für die inneren Rollen von im Bandkurvengerüst verlaufenden Längsprofilen gebildet sein, die bevorzugt an Querelementen festliegen, welche zwischen den Bandtrumen quer zur Förderrichtung verlaufen.

Im Rahmen der Erfindung liegt ein an das durchmessergrößere Ende der Umlenkwalze angeschlossener Flanschstutzen mit die Welle nach außen hin umfangendem Rohrstutzen, wobei der Flanschstutzen eine radiale Anschlagfläche für die Rollen mit zum Förderband rechtwinkeliger Umfangsfläche und der Rohrstutzen eine Lauffläche für die Rollen mit bandparalleler Umfangsfläche bildet.

Die i.w. vertikale Gegenfläche für die mit zum Förderband etwa rechtwinkelige Rolle setzt sich erfindungsgemäß am Bandgerüst an einer Zwischenwand fort und zwar an deren nach außen gerichteten Seite, so daß diese Rolle sowohl im Bereich der Umlenkwalze als auch der Zwischenwand einem Verschieben des -- eine oberhalb des gesamten Bandgerüstes vorgesehene Förderfläche anbietenden -- Förderbandes zur inneren Kurvenseite hin entgegenzuwirken vermag; die Rolle ist im unteren Bereich an einer schrägen Lauffläche der Zwischenwand geführt.

Die äußere der Rollen mit bandparalleler Umfangsfläche wird am Obertrum bevorzugt von einem Führungsblech des Bandgerüstes übergriffen und schlägt an dessen Unterseite an. Die bandparallelen Umfangsflächen der äußeren Rollen wälzen sich im Bereich des Untertrums auf einer geneigten Pultfläche einer Profilleiste ab.

Als günstig hat es sich erwiesen, die Antriebswelle einer als Antriebswalze für den Fördergurt dienenden Umlenkwalze über einen Treibstrang an einen Antriebsmotor, insbesondere einen Stirnradgetriebemotor, anzuschließen, wobei bevorzugt der Treibstrang ein endloser Kettentrieb sowie an Zahnrädern aufgespannt ist.

Nach einem weiteren Merkmal der Erfindung ist die Welle für die Umlenkwalze in einem der Querschnittszunahme der Umlenkwalze entsprechenden spitzen Winkel zur Bandkurvenaußenseite hin geneigt; damit ist die horizontale Führung des Obertrums einstellbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf einen Teil einer Bandkurve für ein Förderband;
- Fig. 2:: den vergrößerten Querschnitt durch Fig. 1 etwa nach deren Linie II-II;
- Fig. 3:: die Draufsicht auf einen Teil der Bandkurve mit einer Antriebs- bzw. Umlenkwalze des Förderbandes;
- Fig. 4:: den Schnitt durch einen anderen Teil des Förderbandes;
- Fig. 5:: einen vergrößerten Ausschnitt aus Fig. 4 zu einer weiteren Ausgestaltung;

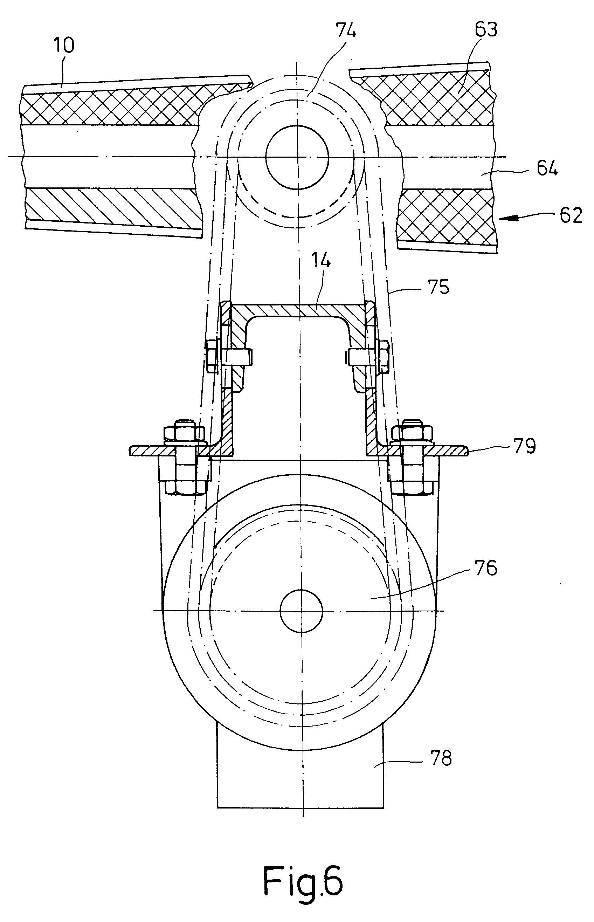

- Fig. 6:: einen Antrieb zu Fig. 3 in Seitenansicht.

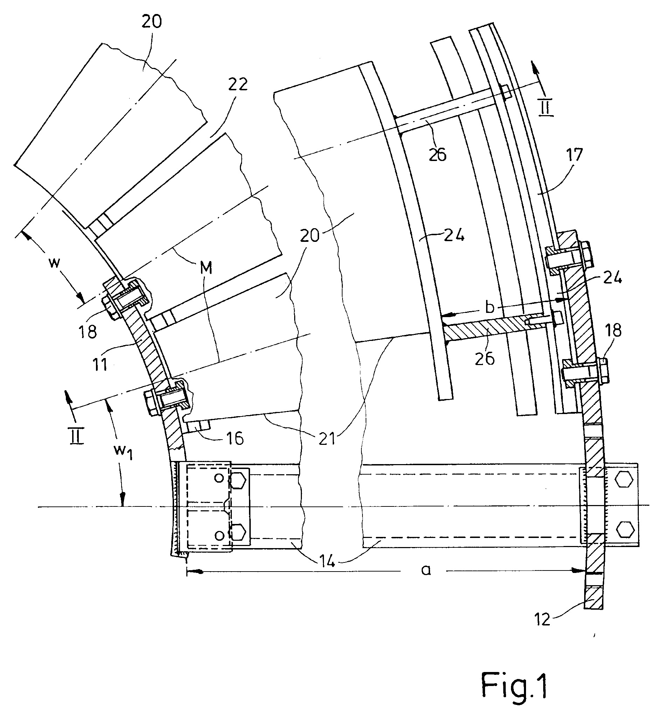

Eine Vorrichtung zum Führen eines Förderbandes oder Fördergurtes 10 in einer Bandkurve wird gemäß Fig. 1 von zwei in Draufsicht teilkreisförmig gekrümmten Seitenwänden 11, 12 begrenzt, die in einem lichten Abstand a von etwa 570 mm verlaufen und durch Querprofile 14 in der Art querschnittlich U-förmiger Lagerschienen verbunden sind.

Sowohl mit der inneren Seitenwand 11 als auch mit der äußeren Seitenwand 12 ist innenseitig ein dem Kurvenverlauf folgendes Bandkurvengerüst 16, 17 durch Schrauben 18 verbunden.

Zwischen dem inneren Bandkurvengerüst 16 und dem äußeren Bandkurvengerüst 17 befinden sich -- zur linken Figurenseite hin in Draufsicht konisch verjüngte -- Gurtplatten 20, deren Längskanten 21 zwischen sich Spaltzonen 22 begrenzen. Der von benachbarten Mittellinien M der Gurtplatten 20 begrenzte Winkel w mißt etwa 15°, der an den unteren Bildrand anschließende Winkel w1 ist mit 17,5° geringfügig größer.

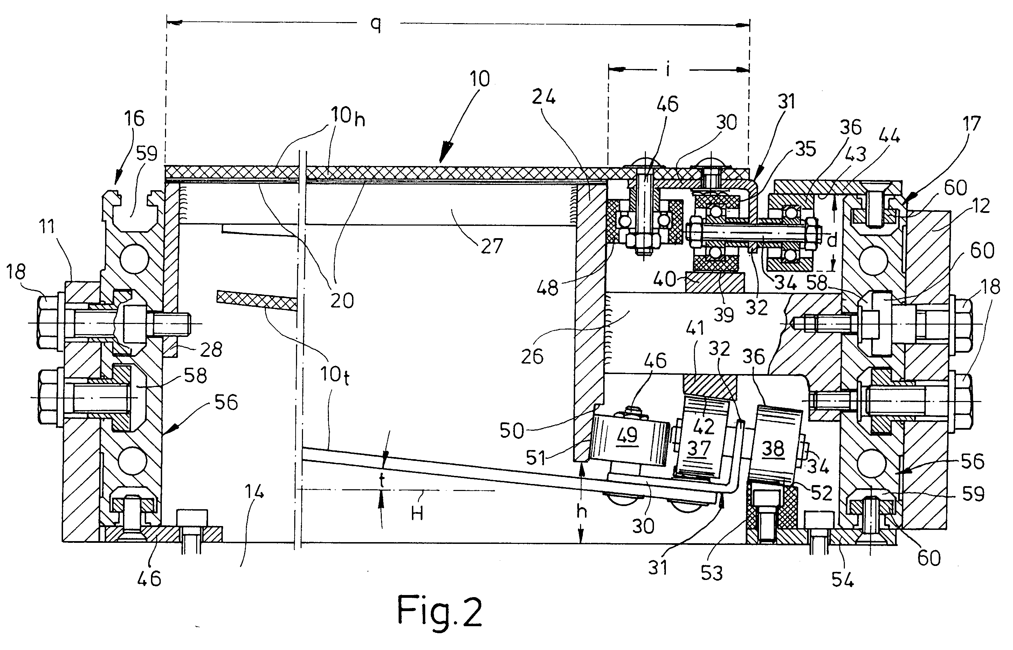

Die Gurtplatten 20 enden an der -- in Fig. 1 rechten --Kurvenaußenseite einer zur Seitenwand 12 in einem Abstand b parallel gekrümmten Zwischenwand 24, die an das äußere Bandkurvengerüst 17 durch Stege 26 und an das innere Bandkurvengerüst 16 nach Fig. 2 durch Stegbleche 27 angeschlossen ist; letztere sind mit der Zwischenwand 24 und einem an das Bandkurvengerüst 16 angeschraubten vertikalen Anschlußblech 28 verschweißt. Die Zwischenwand 24 endet oberhalb des Querprofils 14 in Abstand h von etwa 30 mm zu diesem.

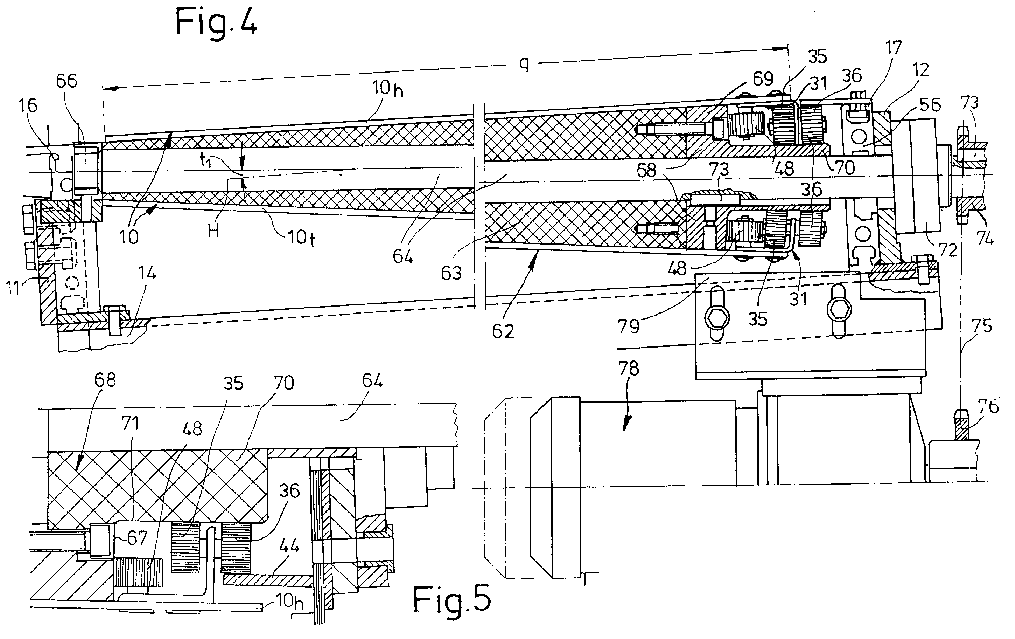

Das Obertrum 10h des Fördergurtes 10 der Breite q von hier 655 mm läuft auf den Gurtplatten 20 und ist -- wie vor allem Fig. 2, 4 verdeutlichen -- die oberste Fläche der gesamten Vorrichtung, deren Seitenteile tiefer liegen. Das Obertrum 10h überkragt an der Kurvenaußenseite die Zwischenwand 24. In dem Überkragbereich der Breite i von 45 mm liegt ein horizontaler Schenkel 30 eines Winkelstückes 31 an der Fördergurtinnenfläche fest. Dessen abwärts gerichteter freier Schenkel 32 trägt eine horizontale Rollenachse 34 für zwei kugelgelagerte Rollen 35 bzw. 36 des Durchmessers d, deren Umfangsflächen 37 bzw. 38 durch Anlage an Gegenflächen das Förderband 10 zu führen vermögen; die Umfangsfläche 37 der inneren Rolle 35 liegt im oberen Bereich der Oberfläche 39 eines -- auf den Stegen 26 festliegenden -- Vierkantprofils 40 auf, im unteren Bereich einem Führungsprofil 41 mit geneigter Oberfläche 42. Die Umfangsfläche 38 der äußeren Rolle 36 berührt nahe dem Obertrum 10h die Unterfläche 39 eines horizontal vom äußeren Bandkurvengerüst 17 abkragenden Führungsblechs 44 und sichert somit gegen ein Abheben.

Insbesondere Fig. 2 verdeutlicht, daß die Umfangsfläche 37 der inneren Rolle 35 mit dem Vierkantprofil 40 bzw. dem Führungsprofil 41 jeweils eine Berührungslinie bildet, die auf der einen Seite der Rollenachse 34 verläuft, wohingegen die Berührungslinie der äußeren Rolle 36 mit dem Führungsblech 44 bzw. der Sockelplatte 54 auf der anderen Seite der Rollenachse 34 liegt; beide Berührungslinien sind also -- in Achsrichtung gesehen -- um 180° versetzt.

Rechtwinklig zu jener horizontalen Rollenachse 34 steht eine zweite Rollenachse 46 für eine -- ebenfalls kugelgelagerte -- horizontal unterhalb des Schenkels 30 drehende Rolle 48; deren Umfangsfläche 49 fährt außenseitig an der Zwischenwand 24 entlang und sichert gegen horizontales Verschieben.

Die Zwischenwand 24 wird vom Untertrum 10t des Fördergurtes 10 unterfahren, welches in einem spitzen Winkel t zur Horizontalen H angeordnet ist und dessen hier oberhalb des Schenkels 30 parallel drehende Rolle 48 in einen Schulterabsatz 50 mit schräger Lauffläche 51 der Zwischenwand 24 eingreift; die in dieser Stellung ebenfalls leicht geneigte -- i.w. vertikal drehende -- äußere Rolle 36 des freien Schenkels 32 wälzt sich auf einer Pultfläche 52 eines Gummiprofils 53 ab; dieses ist auf einer Sockelplatte 54 des Bandkurvengerüstes 17 montiert.

Das Bandkurvengerüst 16, 17 enthält im übrigen ein Strangpreßprofil 56 mit hinterschnittenen Aufnahmenuten 58 an der Außenfläche und Einsatznuten 59 an den Stirnkanten für Befestigungsmittel 60, welche beispielsweise die Seitenwand 11, 12 oder das Führungsblech 44 durchsetzen.

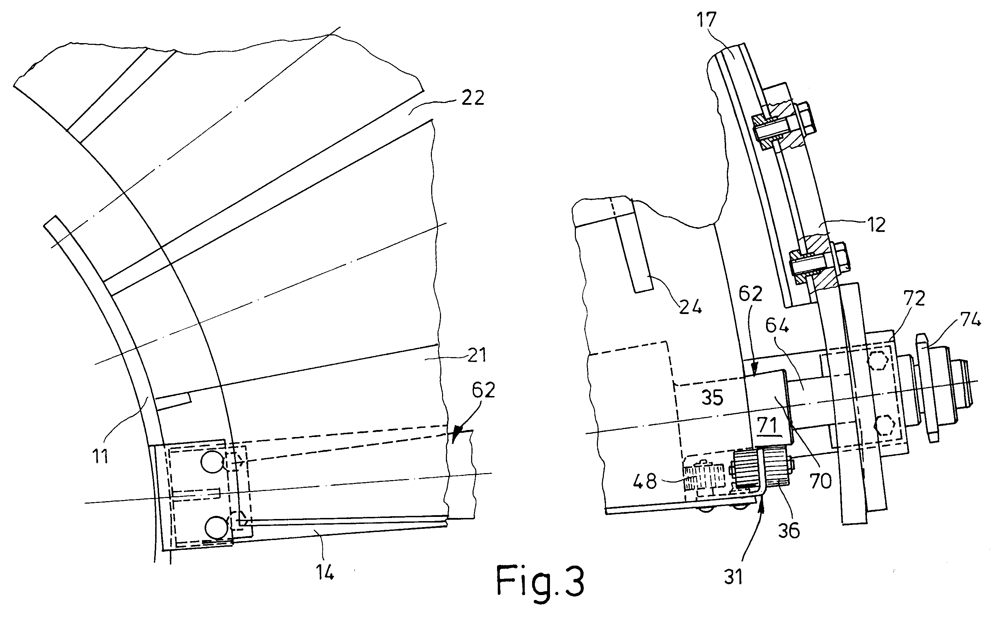

Zum Umlenken des Fördergurtes 10 sind querschnittlich konische Walzen vorgesehen, von denen eine beispielhaft als Antriebswalze 62 auf einer Antriebswelle 64 in Fig. 3, 4 skizziert ist. Eine das Untertrum 10t zur Antriebswalze 62 zurückführende Umlenkwalze ist ihr entsprechend -- also gemäß Fig. 4 -- ausgebildet.

Die Antriebswelle 64 ist in einem jenem Winkel t nahezu entsprechenden Winkel t1 geneigt und in Fig. 4, links, auf der Seitenwand 11 in einem Nadellager 66 gelagert.

An das durchmessergrößere Ende der Antriebswalze 62 ist ein Flanschstutzen 68 angeschraubt, der zum einen den elastischen Rollenbelag 63 stirnseitig mit einem radialen Flanschabschnitt 69 abschließt sowie zum anderen mit einem rohrförmigen Abschnitt 70 in geringem Abstand zum äußeren Bandkurvengerüst 17 endet. Auf dem rohrförmigen Abschnitt 70 des Flanschstutzens 68 wälzen die vertikalen Rollen 35, 36 ab - die horizontal drehenden Rollen 48 laufen außerdem am Flanschabschnitt 69 des Flanschstutzens 68 an.

Die in Fig. 4 rechts abkragende Antriebswelle 64 durchsetzt außerhalb der äußeren Seitenwand 12 ein Zweiloch-Guß-Flanschlager 72 und endet mit einem -- von einer Paßfeder 73 gehaltenen -- Antriebsrad 74. Dieses ist über einen Treibstrang 75 mit einem Stirnrad 76 eines Stirnradgetriebemotors 78 verbunden. Letzterer hängt mittels angeschraubter Motorwinkel 79 am Querträger 14.

Der Antrieb kann über einen Treibriemen als Treibstrang 75 kraftschlüssig erfolgen oder mittels eines -- zwei Zahnräder 74, 76 verbindenden -- Kettentriebes formschlüssig.

Fig. 5 zeigt eine anders gestaltete Lagerung der Rollen 48, 35, 36 am Flanschstutzen 68 in dessen nach unten weisendem Bereich mit etwa wellenparalleler Abrollfläche 71 und dazu etwa rechtwinkeliger Anschlagfläche 67.

## Patentansprüche

1. Fördervorrichtung mit einem in einer Bandkurve geführten und über beidends in einem Bandgerüst drehbar gelagerte Umlenkwalzen gelegten endlosen Förderband (10), dessen eine Förderfläche anbietendes Obertrum (10h) etwa horizontal verläuft und dessen Untertrum (10t) zum Obertrum (10h) in einem Winkel (t) geneigt ist, wobei sich der Querschnitt der konischen Umlenkwalzen zur Kurvenaußenseite hin erweitert und das Förderband (10) an der Kurvenaußenseite eine Rolle (48) mit zu ihm etwa rechtwinkeliger Umfangsfläche (49) sowie eine der Kurvenaußenseite nahe weitere Rolle (36) mit zum Förderband (10) etwa paralleler Umfangsfläche (38) aufweist und beide Umfangsflächen (49, 38) am Bandgerüst abrollen,
dadurch gekennzeichnet,
daß der Rolle (36) mit zum Obertrum (10h) des Förderbandes (10) etwa paralleler Umfangsfläche (38) eine Rolle (35) mit gleichgerichteter Umfangsfläche (37) zugeordnet ist, wobei diese beiden Umfangsflächen an höhenversetzt zueinander weisenden Gegenflächen (39, 43, 42, 52) des Bandgerüstes so anschlagen, daß letztere mit den anliegenden Umfangsflächen bezogen auf die Rollenachse/n (34) in Abstand zu dieser/diesen jeweils entgegengesetzt liegende Berührungslinien bilden.

2. Fördervorrichtung nach Anspruch 1, dadurch gekennzeichnet, daß die innere und die äußere Rolle (35, 36) eine gemeinsame Rollenachse (34) aufweisen und die Gegenflächen (39, 43, 42, 52) für die Umfangsflächen (37, 38) zueinander um das Maß des Rollendurchmessers (d) höhenversetzt sind.

3. Fördervorrichtung nach Anspruch 1 oder 2, dadurch gekennzeichnet, daß die Gegenflächen (39, 42) aufweisende Anschlagteile (40, 41) für die inneren Rollen (35) von im Bandkurvengerüst (17) verlaufenden Längsprofilen gebildet ist.

4. Fördervorrichtung nach einem der Ansprüche 1 bis 3, dadurch gekennzeichnet, daß an das durchmessergrößere Ende der Umlenkwalze (62) ein Flanschstutzen (67) mit die Welle (64) nach außen hin umfangendem Rohrstutzen (70) angeschlossen ist, wobei der Flanschstutzen eine Anschlagfläche (67) für die Rollen (48) mit zum Förderband (10) rechtwinkeliger Umfangsfläche (49) und der Rohrstutzen eine Lauffläche (71) für die weiteren Rollen (35, 36) mit bandparalleler Umfangsfläche (37, 38) bildet.

5. Fördervorrichtung nach einem der Ansprüche 1 bis 4, dadurch gekennzeichnet, daß die zum Förderband (10) rechtwinkeligen Umfangsflächen (49) der Rollen (48) des Obertrums (10h) an der nach außen gerichteten Seite einer Zwischenwand (24) des Bandgerüstes (17) anschlagen und die Umfangsflächen dieser Rollen am Untertrum (10t) an einer schrägen Lauffläche (51) der Zwischenwand geführt sind, wobei gegebenenfalls die Zwischenwand (24) nahe einer äußeren Seitenwand (12) des Bandgerüsts (17) parallel zu dieser verläuft.

6. Fördervorrichtung nach einem der Ansprüche 1 bis 5, gekennzeichnet durch die Zwischenwand (24) und das äußere Bandgerüst (17) verbindende Stege (26), an und unter denen die Längsprofile (40, 41) angebracht sind.

7. Fördervorrichtung mit horizontaler Unterseite eines Anschlagteils für die äußeren Rollen nach einem der Ansprüche 1 bis 6, dadurch gekennzeichnet, daß die äußeren Rollen (36) mit bandparallelen Umfangsflächen (38) im Bereich des Obertrums (10h) von einem Führungsblech (44) des Bandgerüstes (17) übergriffen sind und an dessen Unterseite (43) anschlagen, wobei gegebenenfalls die etwa bandparallelen Umfangsflächen (38) der äußeren Rollen (36) im Bereich des Untertrums (10t) auf einer geneigten Pultfläche (52) einer Profilleiste (53) abrollbar sind.

8. Fördervorrichtung mit als Antriebswalze ausgebildeter Umlenkwalze nach wenigstens einem der Ansprüche 1 bis 7, dadurch gekennzeichnet, daß eine Antriebswelle (64) der als Antriebswalze (62) für das Förderband (10) dienenden Umlenkwalze über einen Treibstrang (75) an einen Antriebsmotor (78), insbesondere einen Stirnradgetriebemotor, angeschlossen ist.

9. Fördervorrichtung nach Anspruch 8, dadurch gekennzeichnet, daß der Antrieb über einen Treibriemen als Treibstrang (75) kraftschlüssig erfolgt, oder daß der Treibstrang (75) ein an Zahnrädern (74, 76) aufgespannter endloser Kettentrieb ist.

10. Fördervorrichtung nach einem der Ansprüche 1 bis 9, dadurch gekennzeichnet, daß die Welle (64) der Antriebs- oder Umlenkwalze (62) in einem deren Querschnittszunahme entsprechenden spitzen Winkel zur Bandkurvenaußenseite hin geneigt ist.

11. Fördervorrichtung nach einem der Ansprüche 1 bis 10, gekennzeichnet durch sich zur Innenseite des Bandgerüsts (16) verjüngende Grundplatten (20) als Auflage für das Obertrum (10h) des Förderbandes (10), wobei sich die Grundplatten zwischen der Zwischenwand (24) sowie einer inneren Seitenwand (11) zu dieser in Draufsicht verjüngen.

## Claims

1. Conveyor comprising an endless conveyor belt (10) guided along a curve and placed over deflecting rollers rotatably supported at either end in a supporting structure, the tight side (10h) of the conveyor belt offering a conveying surface extending substantially horizontally and its slack side (10t) being inclined at an angle (t) relative to the tight side (10h), the cross section of the conical deflecting rollers increasing towards the outside of the curve and the conveyor belt (10) being provided on the outside of the curve with a roller (48) with a circumferential surface (49) substantially perpendicular thereto and close to the outside of the curve with another roller (36) with a circumferential surface (38) substantially parallel to the conveyor belt (10) and both circumferential surfaces (49, 38) rolling on the supporting structure, characterised in that a roller (35) with a circumferential surface (37) pointing in the same direction is associated with the roller (36) with a circumferential surface (38) substantially parallel to the tight side (10h) of the conveyor belt (10), these two circumferential surfaces bearing against vertically offset mating surfaces (39, 43, 42, 52) of the supporting structure in such a manner that the latter form contact lines with the adjacent circumferential surfaces situated opposite the roller axis/axes (34) at a distance therefrom.

2. Conveyor according to claim 1, characterised in that the inner and the outer rollers (35, 36) have a common roller axis (34) and the mating surfaces (39, 43, 42, 52) for the circumferential surfaces (37, 38) are vertically offset relative to one another by the amount of the roller diameter (d).

3. Conveyor according to claim 1 or claim 2, characterised in that stop parts (40, 41) for the inner rollers (35) having the mating surfaces (39, 42) are formed by longitudinal profiles extending along the supporting structure (17).

4. Conveyor according to one of claims 1 to 3, characterised in that a flanged socket (67) with a connecting sleeve (70) embracing the shaft (64) towards the outside is connected to the end of the deflecting roller (62) with a larger diameter, the flanged socket forming a stop surface (67) for the rollers (48) with a circumferential surface (49) perpendicular to the conveyor belt (10) and the connecting sleeve forming a running surface (71) for the other rollers (35, 36) with a circumferential surface (37, 38) parallel to the belt.

5. Conveyor according to one of claims 1 to 4, characterised in that the circumferential surfaces (49) of the rollers (48) of the tight side (10h) perpendicular to the conveyor belt (10) bear against the outside of a partition wall (24) of the supporting structure (17) and the circumferential surfaces of these rollers are guided on the slack side (10t) along an inclined running surface (51) of the partition wall, the partition wall (24) optionally extending close and parallel to an outer side wall (12) of the supporting structure (17).

6. Conveyor according to one of claims 1 to 5, characterised by webs (26) connecting the partition wall (24) and the outer supporting structure (17), on and below which the longitudinal profiles (40, 41) are mounted.

7. Conveyor with a horizontal underside of a stop part for the outer rollers according to one of claims 1 to 6, characterised in that the outer rollers (36) with circumferential surfaces (38) parallel to the belt are embraced in the region of the tight side (10h) by a guide plate (44) of the supporting structure (17) and bear against the underside (43) thereof, wherein the circumferential surfaces (38) of the outer rollers (36) substantially parallel to the belt can optionally roll on an inclined surface (52) of a profiled bar (53) in the region of the slack side (10t).

8. Conveyor with a deflecting roller in the form of a drive roller according to at least one of claims 1 to 7, characterised in that a drive shaft (64) of the deflecting roller serving as a drive roller (62) for the conveyor belt (10) is connected by means of a line drive (75) to a drive motor (78), in particular a spur-gear motor.

9. Conveyor according to claim 8, characterised in that the drive is effected non-positively by means of a drive belt serving as a line drive (75) or that the line drive (75) is an endless chain drive mounted on gears (74, 76).

10. Conveyor according to one of claims 1 to 9, characterised in that the shaft (64) of the drive roller or deflecting roller (62) is inclined towards the outside of the curve at an acute angle corresponding to the increase in the cross section thereof.

11. Conveyor according to one of claims 1 to 10, characterised by base plates (20) tapering towards the inside of the supporting structure (16) serving as supports for the tight side (10h) of the conveyor belt (10), the base plates tapering towards an inner side wall (11) between the partition wall (24) and the said inner side wall when viewed from above.

## Revendications

1. Dispositif de transport avec une bande transporteuse continue guidée dans une courbe de bande et placée sur des rouleaux de renvoi montés à rotation aux deux extrémités dans un bâti à bande, bande transporteuse dont un brin supérieur, offrant une surface de transport, s'étend à peu près horizontalement et dont le brin inférieur est incliné sous un angle par rapport au brin supérieur, la section transversale des rouleaux de renvoi coniques allant en s'élargissant en direction du côté extérieur de la courbe et la bande transporteuse présentant sur la face extérieure de la courbe un rouleau ayant une surface périphérique à peu près à angle droit par rapport à elle, ainsi qu'un autre rouleau proche de la face extérieure de la courbe, avec une face périphérique à peu près parallèle à la bande transporteuse et les deux faces périphériques déroulant sur le bâti de bande,
caractérisé en ce que, au rouleau (36) ayant une face périphérique (38) à peu près parallèle au brin supérieur (10h) de la bande transporteuse (10), est associé un rouleau (35) ayant une face périphérique (37) orientée de façon identique, ces deux faces périphériques venant en butée sur des contre-surfaces (39, 43, 32, 52) tournées l'une par rapport à l'autre, décalées en hauteur, du bâti de bande, de manière que ces dernières forment avec les faces périphériques en appui, en se référant à l'axe ou aux axes de rouleau (34) à distance de celui-ci/ceux-ci, chaque fois des lignes de contact opposées.

2. Dispositif de transport selon la revendication 1, caractérisé en ce que les rouleaux intérieur et extérieur (35, 36) présentent un axe de rouleau (34) commun et les contre-surfaces (39, 43, 42, 52) destinées aux faces périphériques (37, 38) étant décalées en hauteur l'une par rapport à l'autre, de la valeur du diamètre de rouleau (d).

3. Dispositif de transport selon la revendication 1 ou 2, caractérisé en ce que les parties de butée (40, 41) présentant des contre-surfaces (39, 42) pour les rouleaux intérieurs (35) sont constituées de profilés longitudinaux s'étendant dans le bâti à courbe de bande (17).

4. Dispositif de transport selon l'une des revendications 1 à 3, caractérisé en ce qu'à l'extrémité de plus grand diamètre du rouleau de renvoi (62), une tubulure de bride (67) est raccordée à des tubulures (70) entourant vers l'extérieur l'arbre (64), la tubulure de bride constituant une face de butée (67) pour les rouleaux (48), avec une face périphérique (48) à angle droit par rapport à la bande transporteuse (10), et la tubulure constituant une face de défilement (71) pour les autres rouleaux (35, 36) avec la face périphérique (37, 38) parallèle à la bande.

5. Dispositif de transport selon l'une des revendications 1 à 4, caractérisé en ce que les faces périphériques (49) à angle droit par rapport à la bande transporteuse (10) des rouleaux (48) du brin supérieur (10h) viennent en butée sur la face tournée vers l'extérieur d'une paroi intermédiaire (24) du bâti de bande (17), et les faces périphériques de ces rouleaux sont guidés sur le brin inférieur (10t), sur une face de défilement (51) oblique de la paroi intermédiaire, le cas échéant la paroi intermédiaire (24) s'étendant près d'une paroi latérale (12) extérieure du bâti de bande (17), parallèlement à celle-ci.

6. Dispositif de transport selon l'une des revendications 1 à 5, caractérisé par le fait que des nervures (26) reliant la paroi intermédiaire (24) et le bâti de bande extérieur (17) sont montées sur et sous celles des profils longitudinaux (40, 41).

7. Dispositif de transport avec une face inférieure horizontale d'une partie de butée pour les rouleaux extérieurs selon l'une des revendications 1 à 6, caractérisé en ce que les rouleaux extérieurs (36) ayant des surfaces périphériques (38) parallèles à la bande, dans la zone du brin supérieur (10h), sont entourés par une tôle de guidage (44) du bâti à bande (17) et viennent en butée sur sa face inférieure (43), le cas échéant, les faces périphériques (38) à peu près parallèle à la bande des rouleaux extérieurs (36) pouvant rouler dans la zone du brin inférieur (10t) sur une face inclinée (52) d'une barre profilée (53).

8. Dispositif de transport équipé de rouleaux de renvoi réalisés sous la forme de rouleaux d'entraînement, selon au moins l'une des revendications 1 à 7, caractérisé en ce qu'un arbre d'entraînement (64) du rouleau de renvoi servant de rouleau d'entraînement (62) pour la bande transporteuse (10) est raccordée, par un tronçon moteur (75), à un moteur d'entraînement (78), en particulier un moto-réducteur à roues droites.

9. Dispositif de transport selon la revendication 8, caractérisé en ce que l'entraînement s'effectue par une liaison par interaction de force par l'intermédiaire d'une courroie motrice faisant office de train moteur (75), ou en ce que le train moteur (75) est une transmission à chaîne continue, tendue sur des roues dentées (74, 76).

10. Dispositif de transport selon l'une des revendications 1 à 9, caractérisé en ce que l'arbre (64) du rouleau d'entraînement ou de renvoi (62) est incliné vers la face extérieure de la courbe de bande, sous un angle aigu correspondant à son augmentation de section transversale.

11. Dispositif de transport selon l'une des revendications 1 à 10, caractérisé par des plaques de base (20) allant en s'effilant vers le côté intérieur du bâti à bande (16) servant de support au brin supérieur (10h) de la bande transporteuse (10), les plaques de base allant en s'effilant entre la paroi intermédiaire (24), ainsi qu'une paroi latérale intérieure (11), en direction de celle-ci, en vue de dessus.
